Europäisches Patentamt

European Patent Office

Office européen des brevets

(11) Publication number: **0 518 483 A1**

## EUROPEAN PATENT APPLICATION

(21) Application number: **92304257.6**

(22) Date of filing: **12.05.92**

(51) Int. Cl.5: **C08F 297/00**, C08F 293/00,
C09D 153/00

(30) Priority: **14.06.91 GB 9112814**

(43) Date of publication of application:
**16.12.92 Bulletin 92/51**

(84) Designated Contracting States:
**BE CH DE DK ES FR GB IT LI NL SE**

(71) Applicant: **IMPERIAL CHEMICAL INDUSTRIES PLC**
**Imperial Chemical House, Millbank**
**London SW1P 3JF(GB)**

(72) Inventor: **Adshead, David Lawrence**
**69 Altrincham Road**
**Cheadle, Gatley, Cheshire SK8 4EG(GB)**
Inventor: **Ballard, Denis George Harold**
**The Old Coach House, Tarvin Road**
**Chester(GB)**
Inventor: **Buckmann, Alfred Jean Paul**
**Pisastraat 77**
**NL-5237 EK 'sHertogenbosch(NL)**
Inventor: **O'Donnell, John Patrick**
**69 Grangemoor**
**Runcorn, Cheshire WA7 5YB(GB)**
Inventor: **Haddleton, David Mark**
**236 Chester Road**
**Helsby, Warrington WA6 0PW(GB)**

(74) Representative: **Sheller, Alan et al**
**ICI Group Patents Services Dept. PO Box 6**
**Shire Park Bessemer Road**
**Welwyn Garden City, Herts, AL7 1HD(GB)**

(54) Polymers and compositions containing them.

(57) Polypropylene-adherable block copolymers (and coating compositions comprising them) having at least blocks A and B derived from olefinic monomer system comprising monomers with hydrocarbyl groups of at least 5 and 1 to 4 carbon atoms respectively, optionally with another block(s) C derived from a monomer system preferably comprising a multifunctional olefinic monomer, where the levels of A and B monomer(s) in the polymer are respectively is 30 to 90 mole % and 70 to 10 mole % and the overall degree of polymerisation is $\leq 150$.

EP 0 518 483 A1

The present invention relates to a polypropylene-adherable polymer and to a coating composition containing such a polymer.

The use of polypropylene, either as the pure plastics material or in a rubber-toughened form, has become widespread for a large number of applications because of the excellent general properties of the material coupled with its relatively low price compared with other structural materials of equivalent performance. In particular, polypropylene has become the polymer of choice in the manufacture of various external and internal automobile parts, such as bumpers, side mirror supports, interior panels and door handles. When employing such polypropylene articles, it is often desirable to overcoat the basic substrate to achieve, for example, a protective and/or decorative coating, such as a paint coating, or an adhesive coating for subsequent bonding to another substrate.

Unfortunately, because polypropylene possesses a low surface tension (making initial film-formation thereon difficult) and a low polarity, it is difficult to ensure that an applied coating (derived from a coating composition) adheres effectively to the surface of the polypropylene article.

One approach that has been employed for solving this problem has been to apply a physical treatment, such as an electrical discharge, to the polypropylene so as to provide a polar surface. However, this technique tends to cause a deterioration in bulk physical properties.

Another approach has been to employ solvent-born chlorinated polyolefines's (CPO's) to prime the polypropylene, the CPO being used alone or in conjunction with a filmogenic polymer, such as an acrylic polymer or a urethane polymer, in the primer paint composition. CPO's will in fact adhere effectively to a polypropylene surface providing the level of chlorination therein is not too high; the presence of chlorine is necessary to allow solubility in the commonly used paint solvents such as toluene and xylene. Nevertheless, the use of CPO's suffers from a number of disadvantages: the CPO is poorly compatible with common filmogenic polymers such as acrylics and urethanes so that unwanted separation of the components of the primer composition may occur on storage; the CPO has poor outdoor durability; there is a tendency for the CPO to redissolve in the solvents of additionally applied coatings, causing delamination; there is an occasional tendency for the CPO to dehydrochlorinate; and the presence of chlorine in the CPO precludes its use in applications where food is involved, e.g. as in the adherence of aluminium foil tops to polypropylene yoghurt cups.

We have now devised an entirely fresh solution to the problem of ineffective adherence to a polypropylene substrate which does not necessarily require the use of a chlorinated polymer such as CPO, or the need to physically pretreat the polypropylene. It may also be possible, in some cases, not to use organic solvents by employing aqueous-based compositions. We have achieved this solution by the discovery of a novel and useful polypropylene-adherable polymer which can provide the basis of a film-forming coating composition suitable for application to a polypropylene substrate so as to provide a well-adhered coating thereon.

According to the present invention there is provided a polypropylene-adherable polymer wherein said polymer is a block addition copolymer comprising at least oligomeric blocks A and B, wherein A is derived from a monomer system comprising a polymerisable olefinically unsaturated monomer (preferably a methacrylic or acrylic monomer) having a moiety linked to the polymerisable olefinically unsaturated bond which is or includes a hydrocarbyl group of at least 5 carbon atoms (preferably at least 7 carbon atoms), and wherein B is derived from monomer system comprising a polymerisable olefinically unsaturated monomer (preferably a methacrylic or acrylic monomer) having a moiety linked to the polymerisable olefinically unsaturated bond which is or includes a hydrocarbyl group of 1 to 4 carbon atoms (preferably 1 to 3 carbon atoms), said monomer not possessing any hydrocarbyl group of more than 4 carbon atoms, and wherein in said polymer the level of polymerised monomer(s) from which block A is derived is within the range of from 30 to 90 mole % of the polymer, and the level of polymerised monomer(s) from which block B is derived is within the range of from 70 to 10 mole % of the polymer, and wherein the overall degree of polymerisation of the polymer is ≦150 (preferably ≦120, and more preferably ≦100).

There is further provided according to the invention a coating composition suitable for application to a polypropylene-based substrate, which coating composition comprises at least one polypropylene-adherable polymer as defined supra.

For the sake of clarity, by a hydrocarbyl group is meant herein a group containing only carbon and hydrogen (any valency), such as alkyl, alkenyl, alkylene, and alkanetriyl groups. The hydrocarbyl group is usually part of a larger grouping such as an alkyl (or alkenyl or alkylene) ester or alkyl (or alkenyl or alkylene) ether group. Usually a hydrocarbyl group will be spaced from the polymerisable olefinically unsaturated double bond by an intermediate chemical species; typical spacer groups are ester groups and ether groups.

By the overall degree of polymerisation (DP) of the polymer is meant the average total number of

2

monomer units per molecule, i.e. those of A plus those of B plus (if present) those of any other monomer units not used in the provision of blocks A and B. If the DP is more than 150 the polymer tends not to be polypropylene-adherable to any degree no matter what variations in the monomer and their levels are employed. The lower limit of DP is not particularly critical, although for practical purposes will often be at least 10. Often, the DP will be within the range of from 10 to 150, particularly 20 to 150. More preferred ranges are 10 to 120 (20 to 120) and 10 to 100 (20 to 100).

One may also speak of the DP of the polymerised units in each of the individual blocks A, B and other blocks (if present); the percentage fractions of the total DP of each of these will of course equate to the mole % levels of the corresponding monomers providing blocks A, B, and (if present) other blocks.

With regard to the olefinically unsaturated monomer having a hydrocarbyl group of at least 5 carbon atoms which is used for providing block A. The upper limit for the number of carbon atoms in the hydrocarbyl group is not critical but for practical purposes will usually be about 22 (more usually about 15). The use of less than 5 carbon atoms in the hydrocarbyl group tends to result in a poorly adhered, brittle coating. (The monomer could of course also possess a hydrocarbyl group(s) of less than 5 carbon atoms provided it also has a hydrocarbyl group of $\geq$5 carbon atoms). The olefinically unsaturated monomer is in particular a methacrylic or acrylic monomeric species in which the polymerisable unsaturated bond is provided by the double bond of a methacrylic group $CH_2 = C(CH_3)-$ or the double bond of an acrylic group $CH_2 = CH-$. More particularly such a monomer used for providing block A is an ester of methacrylic acid or acrylic acid of formula $CH_2 = CR^1CO_2R^2$ where $R^1$ is methyl or H and $R^2$ an optionally substituted (e.g. optionally halo or hydroxy substituted) alkyl, cycloalkyl or aryl group of at least 5 carbon atoms, more usually at least 6 carbon atoms (usual ranges being 5 to 20 and 6 to 15 carbon atoms). More specific examples of such monomers include n-octyl methacrylate, n-hexyl methacrylate, 2-ethylhexyl methacrylate, n-decyl methacrylate, isodecyl methacrylate lauryl methacrylate, cyclohexyl methacrylate, and docosanyl methacrylate (and the corresponding acrylate compounds). n-Octyl methacrylate, n-hexyl methacrylate, cyclohexyl methacrylate and 2-ethylhexyl methacrylate are particularly preferred.

The level in the polymer of monomer(s) providing block A should be at least about 30 mole % in the copolymer. If it is below this level, the coating film derived from the polymer tends to be very poorly polypropylene-adherable no matter what variations in the monomers (and their levels) and the DP are used. If the level of monomer(s) providing block A is above about 90 mole %, the resulting coating film tends to be of very low mechanical strength and lacks cohesiveness (tending to undergo cohesive failure when pulled away from a polypropylene substrate). A more usual range for the level of monomer(s) in the polymer providing block A is about 30 to 80 mole % (especially 40 to 80 mole %).

With regard to the olefinically unsaturated monomer(s) having hydrocarbyl groups of 1 to 4 carbon atoms which is used for providing block B. This should not have a hydrocarbyl group of more than 4 carbon atoms, although it may possess more than 1 hydrocarbyl group of 1 to 4 carbon atoms. The monomer preferably has 1 to 3 carbon atoms in the hydrocarbyl group and the resulting block B, depending on its specific nature, can be used to adjust or effect various properties or characteristics of the polymer, for example its glass transition temperatures Tg or its compatibility with other polymer coatings which may be applied subsequently if the coating is to be used as a primer rather than a single coat. The olefinically unsaturated monomer is in particular a methacrylic or acrylic species in which the polymerisable unsaturated double bond is provided by the double bond of a methacrylic group $CH_2 = C(CH_3)-$ or the double bond of an acrylic group $CH_2 = CH-$. More particularly the such a monomer used for providing block B is an ester of methacrylic acid or acrylic acid of formula $CH_2 = CR^3CO_2R^4$ where $R^3$ is methyl or H and $R^4$ is an optionally substituted (e.g. optionally halo or hydroxy substituted) alkyl group of 1 to 4 carbon atoms, more usually 1 to 3 carbon atoms. More specific examples of such monomers include methyl methacrylate, ethyl methacrylate, n-propyl methacrylate, isopropyl methacrylate, n-butyl methacrylate, sec-butyl methacrylate, isobutyl methacrylate and tert.butyl methacrylate (and the corresponding acrylate compounds). Methyl methacrylate is particularly preferred as a monomer for providing block B on account of its effectiveness, low cost and ready availability.

The level in the polymer of monomer(s) providing block B should be within the range of from about 70 to 10 mole %, and more usually about 70 to 20 mole % (especially 60 to 20 mole %).

The polymer of the invention may also (optionally) comprises a further block C (there being one or more further oligomeric blocks in this embodiment but in particular one only further type of block, i.e. the block C) which is provided by a monomer system comprising a polymerisable olefinically unsaturated monomer(s) which monomer system is different to both of those providing the blocks A and B already in the polymer, although the monomer(s) of the monomer system of C may possibly fall within the broadest general defined scope of the monomers used for providing blocks A and B (although it is usually either one within the general scope of the monomer(s) used for providing block B and outside the general scope of the monomer(s) used for providing block A, or outside the general scope of both).

In particular the monomer system providing block C comprises a monomer having an olefinically unsaturated double bond for taking part in the addition polymerisation to form the polymer and at least one further functional group which survives (at least in part) the addition polymerisation and therefore remains in the resulting polymer and which allows the polymer to undergo further reaction subsequent to the coating formation. Such a monomer is called herein a multifunctional monomeric material.

Particularly, the further functional group(s) is (are) one(s) which allows the polymer to undergo a crosslinking reaction during and/or subsequent to coating formation. Such a group could e.g. be an unsaturated double bond which (at least in part) has survived the addition polymerisation and will undergo subsequent crosslinking under appropriate conditions depending on the particular type of unsaturated group (e.g. by autoxidation crosslinking or by radiation or thermally-induced crosslinking). It might also for example be an alkoxysilyl group(s). Examples of such multifunctional monomers include allyl methacrylate, methallyl methacrylate, and the corresponding acrylate compounds; other methacrylates or acrylates of the autoxidisable type; and alkoxysilyl (meth)acrylate compounds such as trimethoxy silyl propyl methacrylate. Allyl methacrylate is particularly preferred. (Such multi olefinic monomers as mentioned above may be contrasted with the monomers used for making blocks A and B which are, generally speaking, mono olefinically unsaturated materials).

The further functional group(s) for allowing subsequent crosslinkability can also be a reactive non-olefinic or non-silyl functional group such as a hydroxy, amino, epoxy or carboxyl group. As examples one may mention glycidyl methacrylate and glycidyl acrylate. Such groups may allow crosslinking by reacting with coreative groups contained in other blocks in the polymer (e.g. in A or B blocks, or in further blocks) if they contain such coreactive groups, or in an added component(s) of the coating composition. Mutual coreactive groups could e.g. be hydroxyl/carboxyl (to form ester crosslinks) and amino/carboxyl (to form amide crosslinks).

The level in the polymer of the polymerised monomer(s) from which block C is derived may usually be within the range of from 0 to 50 mole % of the polymer, and if present usually from 1 to 50 mole %, more usually 2 to 30 mole %.

The presence of such a further block C, particularly where providing latent crosslinkability, is useful to further refine and adjust the properties of the polymer. For example it may be employed to further adjust or improve properties such as glass transition temperature, coating stickiness, mechanical properties, and, in particular, solvent resistance.

Variations of the order of the blocks in the polymer of the invention may be contemplated. For example, where the polymer has only blocks of types A and B, the block order could be AB (the A block being formed first) or BA (the B block being formed first). Variations such as ABA, BAB, ABAB etc. can also be contemplated, i.e. where a block A and/or B and/or other blocks can be split into smaller blocks (within reason of course, else the polymer ultimately becomes a random copolymer). When the polymer also has a block(s) of type C, the block orders could be, for example, ABC, BAC, CAB, ACB, CBA, ACACB, ACAB, etc. It may, in some cases, particularly when using a block C monomer providing latent crosslinkability (such as allyl methacrylate), be useful for the block C to be at the end of the block chain (e.g. ABC, BAC, or ABAC).

The monomer systems providing block A or block B, or any other block(s) in the block copolymer if present (e.g. block C), will usually consist of a single monomer, e.g. blocks A, B, C (and other blocks) will usually contain repeating units of only one monomer. However, it is within the scope of the invention for one or more of these blocks to comprise more than one monomer, provided that in the case of an A block, monomer(s) having a hydrocarbyl group of at least 5 carbon atoms form a predominate proportion of the block (more than 50 mole %, more usually at least 70 mole % of the block A), and in the case of a B block, monomer(s) having a hydrocarbyl group of 1 to 4 carbon atoms form a predominate proportion of the block (more than 50 mole %, more usually at least 70 mole % of the block B). There are no restrictions on block C or further blocks. Moreover, in such an embodiment the distribution of the different monomers in the separate block(s) can be random.

The block copolymers of the invention may be conveniently prepared by the polymerisation technique known as anionic addition polymerisation, wherein a catalyst such as an organolithium compound (optionally with an organoaluminium species) is employed (although of course any other suitable polymerisation technique could also be used, e.g. group transfer polymerisation). Most anionic polymerisations of the type mentioned above need to be effected at low temperatures, e.g. between -60 and -100°C, in order to achieve acceptable controllability of the polymerisation process and resulting polymer properties. A recent development, however, which is particularly suited for the preparation of the polymers of the present invention, employs a "screened" anionic polymerisation process in which the active metallic species of the catalyst are screened by bulky organic groups. Such a polymerisation technique allows a much greater

4

control of the polymerisation process and product properties (such as molecular weight and molecular weight distribution - the latter being very narrow in this type of polymerisation) and may also be carried out at relatively high temperatures, such as 0 to 60°C. It is particularly well suited to the polymerisation of vinylic, especially methacrylic monomers. This new process is, in brief, a process for the addition polymerisation of vinylic (in particular methacrylic) monomers at a temperature in the range of -20 to 60°C, in the presence of a catalyst comprising:

(a) a first component of empirical formula (I):

MT      (I)

wherein:

M      is an alkali metal atom (often Li); and

T      is bulky hydrocarbyl which contains at least 4 carbon atoms and is optionally substituted by one or more pendent substituents, or hetero-substituted hydrocarbyl, each of which is inert in the process conditions; and

(b) a (co-catalyst) second component comprising a compound of empirical formula (II):

$Q(X_m)(Y_n)Z_p$      (II)

wherein:

Q is Al, B or Zn;

m, n and p are each 0 or an integer such that $(m + n + p) = 2$ or 3 (depending on the appropriate valency of Q); and

X, Y and Z are each independently optionally substituted bulky hydrocarbyl, or

X and Y together are optionally substituted hydrocarbadiyl, and

Z is optionally substituted bulky hydrocarbyl,

all of which groups are inert in the process conditions.

This process is claimed and described in EP-A-O434316 (Imperial Chemical Industries PLC), reference to which is made herein. The polymerisation is typically carried out using at least one fluid component for solubilising the catalyst. This may be provided (if appropriate) by one or more of the monomers used in the polymerisation and/or by the presence of an inert liquid carrier vehicle (dispersant or solvent) compatible with the monomer(s) and inert under the polymerisation conditions. Examples of suitable inert solvents or vehicles (if desired) include aromatic hydrocarbon solvents, such as benzene, toluene or xylene. These may be used optionally in admixture with any of the aliphatic hydrocarbon series of solvents, such as alkanes, e.g. propane, butanes, including n-butane and 2-methylpropane, pentanes, including n-pentane and 2-methylbutane, and hexanes, including n-hexane and 2- and 3-methylpentanes, and mixtures thereof.

The polymerisation process itself involves sequentially block oligomerising the relevant monomers to be used to form the blocks of the polymer. For example, a first monomer can be initially polymerised using the catalyst and a second monomer added to the initial oligomer block solution. The second monomer, generally added in solution in a suitable organic solvent (which is often the same as the first reaction solvent) is then copolymerised with the first block. Further blocks (if used) may be similarly incorporated by further sequential polymerisation (to produce block copolymers such as, for example, ABC, ABA, BAB, ABAB, CAB, BCB, CBA, ACACB, ACAB, and so on).

It should be understood that a given polymerisation technique will not necessarily be appropriate for the polymerisation of all monomers that might be used for preparing the polymers of the invention, and an appropriate polymerisation technique should always be selected according to the particular monomers to be polymerised. For example, anionic polymerisation while appropriate for polymerising methacrylic monomers may not necessarily be effective for polymerising acrylic monomers, whereas group transfer polymerisation would be effective for polymerising acrylic monomers.

The coating composition of the invention may be a solvent-based composition comprising a solvent-based dispersion or solution of a block polymer (as defined supra). By a "solvent-based" dispersion or solution is meant a dispersion or solution of the block polymer in a medium of which one or more organic liquids is the principal component (more than 50 wt %), although small amounts of water may optionally be present. Usually the solvent-based composition is a solvent-based solution although the polymer could conceivably be non-dissolved (i.e. dispersed - usually colloidally dispersed). The organic liquid medium of the composition could be that as used for the preparation of the polymer (e.g. as used in a screened anionic polymerisation as described supra, the catalyst used being first removed if necessary or desired), or it could be replaced by (entirely or partly) or combined with one or more other suitable organic liquids.

The coating composition of the invention could also be an aqueous-based composition comprising an aqueous dispersion or (more rarely)solution of a block polymer (as defined supra). By an aqueous-based dispersion or solution is meant a dispersion or solution of the polymer in an aqueous medium of which water is the principal component (more than 50 wt%); small amounts of organic liquids could optionally be present. The aqueous dispersion could e.g. be an aqueous latex of the polymer. The aqueous medium could be provided by replacing the solvent medium from polymerisation (if used) directly or in stages with water. Alternatively the polymer could be first isolated completely from the solvent medium and dispersed in water using appropriate techniques and dispersants.

The composition of the invention may, as explained supra, be readily applied to an untreated polypropylene substrate, although this does not of course preclude it being applied to a substrate that has been treated. They provide coatings having fairly good to really excellent polypropylene adherability.

The coating composition may be employed to provide a decorative, protective, or adhesive coating in its own right, or may be employed to provide a primer coating prior to the application of one or more further coatings (e.g. paint coatings or adhesive coatings). In the latter case, it is obviously desirable that the block polymer should be properly adherable to any polymer(s) of the subsequently applied coating (e.g. an acrylic or urethane polymer), and its component monomers may be selected with this in mind.

The coatings derived from the compositions of the invention tend to vary from being quite sticky to the touch to being entirely non-sticky to the touch, a factor in this regard being the glass transition temperature Tg (overall or in individual blocks) which may vary quite widely, e.g. from -80 to 150°C (-70 to 80°C). The criteria affecting whether or not a coating is likely to be sticky or non-sticky are not exactly predictable to us, but a desired level of stickiness (e.g. sticky, fairly sticky or non-sticky) can be achieved by experimenting with the various parameters of the polymer such as the nature and levels of the monomers of blocks A, B and if present C and further blocks. It can be envisaged that in some applications a non-sticky coating would be desirable, such as e.g. when the coating provides a protective or decorative coating in its own right. In other applications, e.g. where the coating provides an adhesive coating or a primer coating for a subsequently applied coating, a sticky coating may not necessarily be detrimental and in some cases may actually be advantageous (e.g. in adhesive coating applications).

The composition of the invention often has a polymer solids content within the range of from about 10 to 75% by weight, more usually 15 to 60% by weight.

The composition of the invention may include, or be subsequently formulated with, various other ingredients. For example, it may if desired include, or subsequently be formulated with, ingredients commonly employed in film-forming coating formulations such as defoamers, rheology control agents, thickeners, dispersing and stabilising agents (usually surfactants), peroxides (to develop latent crosslinkability if present and if peroxide is required), wetting agents, fillers, extenders, fungicides, coalescing solvents, plasticisers, anti-freeze agents, pigments, and other types of binder polymer (e.g. acrylics or urethane polymers). For many applications, it is envisaged that the composition will be in the form of, or will subsequently be used in a formulation to provide, a paint, and will therefore include materials commonly employed in paint formulations, such as pigments and other ingredients where appropriate (extenders, stabilisers, thickeners, coalescing solvents, defoamers, surfactants, and so on).

The composition of the invention may be applied to a polypropylene substrate (or any other plastics substrate if suitable) by any suitable technique, e.g. brush, spray, roller, dipping or spreading with a knife or rod, and removing the carrier medium by natural or accelerated drying (e.g. in an oven). When the polymer has latent crosslinkability, an appropriate period of time and/or the application of suitable crosslinking means (such as heat or radiation) should be invoked to acceptably develop the crosslinking.

The present invention is now illustrated by reference to the following examples. The prefix C before an example denotes that it is not according to the invention (being comparative). Unless otherwise specified, all parts, percentages and ratios are on a weight basis.

In these examples, the following abbreviations are used

OMA :        n-octyl methacrylate
MMA :        methyl methacrylate
EHMA :       2-ethylhexyl methacrylate
CHMA :       cyclohexyl methacrylate
HMA :        n-hexyl methacrylate
LMA :        lauryl methacrylate
AMA :        allyl methacrylate
DP :         degree of polymerisation

General procedure for preparation of block copolymers

The polymerisations are carried out in a reaction vessel (volume 50ml) equipped with a rubber seal, a vacuum/nitrogen inlet, a thermocouple (linked to a digital thermometer) and a magnetic stirrer. All additions of reagents to the reaction vessel are made through the seal by syringes fitted with hypodermic needles. The syringes and needles are stoved in a hot oven and cooled under dry nitrogen prior to use.

The required volume of dry toluene is added to the reaction vessel and stirred continuously. The reaction vessel is then cooled to obtain a temperature of 0°C using a suitable cooling bath (e.g. ice).

Triisobutyl aluminium solution (1.0 mol/dm$^3$ in toluene) is taken in the required amount and added to the reaction vessel. This is allowed to stir for a couple of minutes before adding a required amount of tert.butyl lithium solution (1.7 mol/dm$^3$ in pentane). The catalytic reagents are stirred for 30 minutes at 0°C, then cooled to -10°C using an appropriate cooling bath (e.g. ice/sodium chloride mixture).

Dry monomer (as required for the first block) is taken in the required amount and added at a rate such that the temperature does not rise above 0°C. The addition of monomer causes the reaction mixture to turn yellow/green; this colouration disappears progressively as monomer is consumed. The progress of the reaction can be followed by proton nuclear magnetic reasonance.

When no unreacted monomer remains, a sample is taken for molecular weight determination by gel permeation chromatography. The monomer required for the next block is now added. This process can be repeated as necessary for the different blocks.

In all the block copolymerisations, polymerisation of the monomers proceeds quantitatively, so the amounts used correspond to the polymerised levels in the copolymers.

Termination and catalyst precipitation is achieved by adding methanol or water in a 4 times excess of the amount required to destroy each carbon-metal bond, i.e.

$$\text{amount methanol} = [(\text{amount Al(isobutyl)}_3) \times 3 + \text{amount t-butylLi}] \times 4 \text{ moles or water required}$$

The catalyst precipitate is removed by centrifugation of the mixture at 5 to 10 x 10$^3$ rpm for between 15 and 60 minutes as required. Clear colourless polymer solution is then decanted off.

The polymer is characterised by gel permeation chromatography for molecular weight information and proton nuclear magnetic reasonance for compositional information.

The following table shows the relationship between DP (total number of monomer units per chain) and the relative molar ratios of monomer : t-butyllithium catalyst, when using the triisobutyl aluminium/t-butyllithium catalyst (normally used at a ratio of 2:1, although it can be used in ratios of from 1:1 to 20:1).

| DP of Polymer | Molar ratio t-butylLi : monomer |
|---|---|
| 5 | 1:2.5 |
| 20 | 1:10 |
| 50 | 1:25 |
| 100 | 1:50 |
| 150 | 1:75 |
| 200 | 1:100 |

Coating and Testing procedure

Coating compositions are applied to plaques of pure polypropylene homopolymer (having had no surface pretreatment). The polypropylene plaque is cleaned with methanol-soaked tissues prior to coating. The coating composition (a solution of polymer 20% w/w in toluene) is applied to the plaque using a grooved bar (50 μm wet film thickness). The coated plaque is left in the air at room temperature for about 20 minutes and then placed in an oven (in air) at 60°C for about 10 hours. The plaque is removed from the oven and cooled in air at room temperature for 30 minutes before testing.

The cooled plaque is crosshatched using a sharp parallel bladed tool, so as to produce squares approximately 1mm x 1mm, and the crosshatched area covered with a piece of sticky plastic tape which is pressed down well to ensure complete contact with the surface. The tape is ripped off quickly at an angle of 180°C to the surface. The percentage of coating remaining is estimated under a microscope to give an adhesion value.

Examples 1 to 3, C4, C5

AB Block coplymers of OMA and MMA were made using the above described procedure, varying the DP of the MMA segments so as to achieve different overall DPs for the copolymers (see Table 1). Coating compositions were prepared therefrom and coatings formed on polypropylene as described above; the adhesion and comments on properties are given in Table 1.

Table 1

| Example No. | DP of OMA segment (A) | DP of MMA segment (B) | Overall DP | Adhesion % | Comments |
|---|---|---|---|---|---|
| 1 | 50 | 32 | 82 | 40 | Sticky |
| 2 | 50 | 50 | 100 | 100 | Sticky |
| 3 | 50 | 100 | 150 | 40 | Non-sticky |
| C 4 | 50 | 200 | 250 | 0 | V.brittle |
| C 5 | 50 | 450 | 500 | 0 | V.brittle |

Examples 6 to 8, C9

AB block copolymers of OMA and MMA were made using the above described procedure, keeping overall DP constant at 100 and varying the mole % of the OMA and MMA monomer components. Coating compositions were prepared therefrom and coatings formed on polypropylene as described above. The details are given in Table 2.

Table 2

| Example No. | DP of OMA segment (A) eq to mole % | DP of MMA segment (B) eq to mole % | Overall DP | Adhesion % | Comments |
|---|---|---|---|---|---|
| 6 | 80 | 20 | 100 | 70 | Sticky |
| 7 | 60 | 40 | 100 | 100 | Sl.sticky |
| 8 | 40 | 60 | 100 | 70 | Non-sticky |
| C 9 | 20 | 80 | 100 | 0 | Brittle |

In runs using polymers with more than about 90 mole % OMA (including the homopolymer of OMA), at various DPs, the coating loses all mechanical strength and undergoes cohesive failure in the adhesion test, even though its polypropylene adhesion is often good.

Examples C10 and C11

AB block copolymers of BMA and MMA were made using the above described procedure, using an overall DP of 50 for both, and varying the mole % of the BMA and MMA. Coating compositions were prepared therefrom and coatings formed on polypropylene as described above. The details are given in Table 3.

Table 3

| Example No. | DP of BMA segment (A) | DP of MMA segment (B) | Overall DP | Adhesion % | Comments |
|---|---|---|---|---|---|
| C 10 | 40 | 10 | 50 | 0 | V.brittle |
| C 11 | 30 | 20 | 50 | 0 | V.Brittle |

Examples 12, C13 and C14

ACB block copolymers of OMA, AMA and MMA each at constant molar composition OMA (60 mole %), AMA (10 mole %) and MMA (30 mole %) were made using the above described method, varying the overall DP. Coating compositions were prepared and coatings formed on polypropylene as described above. The details are given in Table 4.

Table 4

| Example No. | DP of OMA segment (A) | DP of AMA segment (C) | DP of MMA segment (B) | Overall DP | Adhesion % | Comments |
|---|---|---|---|---|---|---|
| 12 | 48 | 8 | 24 | 80 | 100 | Sticky |
| C13 | 96 | 16 | 48 | 160 | 20 | Sticky |
| C14 | 120 | 20 | 60 | 200 | 10 | Sticky |

Examples 15 to 18

ABC, ACB, ACACB, and ACAB block copolymers based on OMA (A), MMA (B), and AMA (C) were prepared using the above described method. Coating compositions were prepared and coatings formed on polypropylene. The details are given in Table 5.

Table 5

| Example No. | Type | Block order and DP of segments | | | | | Overall DP | Adhesion % |
|---|---|---|---|---|---|---|---|---|
| 15 | ABC | OMA 48 | MMA 24 | AMA 8 | | | 80 | 65 |
| 16 | ACB | OMA 22 | AMA 6 | MMA 22 | | | 50 | 100 |
| 17 | ACACB | OMA 18 | AMA 5 | OMA 18 | AMA 5 | MMA 34 | 80 | 100 |
| 18 | ACAB | OMA 18 | AMA 10 | OMA 18 | MMA 34 | | 80 | 100 |

Examples 16 and 19

ACB block copolymers at a constant molar composition of 44 mole % (A), 12 mole % (C) and 44 mole % (B) were compared, being prepared from OMA, AMA, MMA; and EHMA, AMA, MMA respectively. Coating compositions were prepared and coatings formed on polypropylene. The details are shown in Table 6.

Table 6

| Example No. | Type | Block order and DP of segments | | | Overall DP | Adhesion % |
|---|---|---|---|---|---|---|
| 16 | ACB | OMA 22 | AMA 6 | MMA 22 | 50 | 100 |
| 19 | ACB | EHMA 22 | AMA 6 | MMA 22 | 50 | 100 |

Examples 20 and 21

AB block copolymers of CHMA and MMA were made using the above-described procedure, keeping overall DP constant at 100 and varying the mole % of the CHMA and MMA components. Coating compositions were prepared therefrom and coatings formed an polypropylene as described above. The details are given in Table 7.

9

Table 7

| Example No. | DP of CHMA segment (A) eq to mole % | DP of MMA segment (B) eq to mole % | Overall DP | Adhesion % | Comments |
|---|---|---|---|---|---|
| 20 | 40 | 60 | 100 | 70 | Brittle |
| 21 | 80 | 20 | 100 | 80 | Brittle |

Examples 22 and 23

AB block copolymers of HMA and MMA were made using the above-described procedure, keeping overall DP constant at 100 and varying the mole % of the HMA and MMA components. Coating compositions were prepared therefrom and coatings formed on polypropylene as described above. The details are given in Table 8.

Table 8

| Example No. | DP of segment (A) eq to mole % | DP of MMA segment (B) eq to mole % | Overall DP | Adhesion % |
|---|---|---|---|---|
| 22 | 80 | 20 | 100 | 50 |
| 23 | 60 | 40 | 100 | 65 |

Examples 24 and 25

AB block copolymers of LMA and MMA were made using the above-described procedure, keeping overall DP constant at 100 and varying the mole % of the LMA and MMA components. Coating compositions were prepared therefrom and coatings formed on polypropylene as described above. The details are given in Table 9.

Table 9

| Example No. | DP of LMA segment (A) eq to mole % | DP of MMA segment (B) eq to mole % | Overall DP | Adhesion % | Comments |
|---|---|---|---|---|---|
| 24 | 60 | 40 | 100 | 50 | Sticky |
| 25 | 40 | 60 | 100 | 50 | Sticky |

**Claims**

1. A polypropylene-adherable polymer wherein said polymer is a block addition copolymer comprising at least oligomeric blocks A and B, wherein A is derived from a monomer system comprising a polymerisable olefinically unsaturated monomer having a moeity linked to the olefinically unsaturated bond which is or which includes a hydrocarbyl group of at least 5 carbon atoms, and wherein B is derived from a monomer system comprising a polymerisable olefinically unsaturated monomer having a moeity linked to the polymerisable olefinically unsaturated bond which is or which includes a hydrocarbyl group of not more than 4 carbon atoms, and wherein in said polymer the level of polymerised monomer(s) from which block A is derived is within the range of from 30 to 90 mole % of the polymer, and the level of polymerised monomer(s) from which block B is derived is within the range of from 70 to 10 mole % of the polymer, and wherein the overall degree of polymerisation is ≦ 150.

2. A polymer according to claim 1 wherein the overall degree of polymerisation is ≦ 120.

3. A polymer according to either claim 1 or claim 2 wherein the overall degree of polymerisation is ≦ 100.

EP 0 518 483 A1

4. A polymer according to any one of claims 1 to 4 wherein the overall degree of polymerisation is at least 10.

5. A polymer according to any one of the preceding claims wherein said hydrocarbyl group of said olefinically unsaturated monomer used for providing block A has 5 to 22 carbon atoms.

6. A polymer according to any one of the preceding claims wherein said olefinically unsaturated monomer used for providing block A is a methacrylic or acrylic monomer in which the polymerisable unsaturated double bond is provided by the double bond of a methacrylic group $CH_2 = C(CH_3)-$ or the double bond of an acrylic group $CH_2 = CH-$

7. A polymer according to claim 6 wherein said olefinically unsaturated monomer used for providing block A is an ester of methacrylic acid or acrylic acid of formula $CH_2 = CR^1CO_2R^2$ where $R^1$ is methyl or H and $R^2$ is an optionally substituted alkyl, cycloalkyl or aryl group of at least 5 carbon atoms.

8. A polymer according to claim 8 wherein $R^1$ has 5 to 20 carbon atoms.

9. A polymer according to claim 7 or claim 8 wherein said olefinically unsaturated monomer used for providing block A is selected from n-octyl methacrylate, n-hexyl methacrylate, 2-ethylhexyl methacrylate, n-decyl methacrylate, lauryl methacrylate, cyclohexyl methacrylate, and docosanyl methacrylate, and the corresponding acrylate esters.

10. A polymer according to any one of the preceding claims wherein the level in the polymer of the polymerised monomer(s) from which block A is derived is within the range of from 30 to 80 mole % of the polymer.

11. A polymer according to any one of the preceding claims wherein said hydrocarbyl group of said olefinically unsaturated monomer used for providing block B has 1 to 3 carbon atoms.

12. A polymer according to any one of the preceding claims wherein said olefinically unsaturated monomer used for providing block B is a methacrylate or acrylic monomer in which the polymerisable double bond is provided by the double bond of a methacrylic group $CH_2 = C(CH_3)-$ or the double bond of an acrylic group $CH_2 = CH-$.

13. A polymer according to claim 12 wherein said olefinically unsaturated monomer used for providing block B is an ester of methacrylic acid or acrylic acid $CH_2 = CR^3CO_2R^4$ where $R^3$ is methyl or H and $R^4$ is an optionally substituted alkyl group of 1 to 4 carbon atoms.

14. A polymer according to claim 13 wherein said olefinically unsaturated monomer used for providng block B is selected from methyl methacrylate, ethyl methacrylate, n-propyl methacrylate, isopropyl methacrylate, n-butyl methacrylate, sec-butyl methacrylate, isobutyl methacrylate and tertiary butyl methacrylate, and the corresponding acrylate esters.

15. A polymer according to any one of the preceding claims wherein the level in the polymer of the polymerised monomer(s) from which block B is derived is within the range of from 70 to 20 mole % of the polymer.

16. A polymer according to any one of the preceding claims wherein said polymer has blocks only of type A and type B.

17. A polymer according to any one of claims 1 to 15 wherein said polymer comprises a further block denoted by C which is provided by a monomer system comprising a polymerisable olefinically unsaturated monomer(s) which monomer system is different to both of those providing blocks A and B.

18. A polyer according to claim 17 wherein the monomer system providing block C comprises a multifunctional monomer having an olefinically unsaturated double bond for taking part in the addition polymerisation to form the polymer and at least one further functional group which survives the addition polymerisation and is present in the resulting polymer.

11

19. A polymer according to claim 18 wherein said further functional group is selected from an unsaturated double bond, an alkoxy silyl group, a hydroxyl group, an amino group, an epoxy group and a carboxyl group.

20. A polymer according to claim 19 wherein said multifunctional monomer is selected from allyl methacrylate, methallyl methacrylate and the corresponding acrylate esters; and alkoxysilyl (meth) acrylate compounds.

21. A polymer according to any one of claims 17 to 20 wherein in said polymer the level of the polymerised monomer(s) from which block C is derived is within the range of 1 to 50 mole % of the polymer.

22. A polymer according to any one of the preceding claims wherein the monomer systems providing block A and block B, and any other block(s) in the polymer, such as block C, each consist of a single monomer.

23. A polymer according to any one of claims 1 to 21 wherein one or more of the monomer systems for providing the blocks of the polymer comprise more than one monomer provided that in the case of an A block, monomer(s) having a hydrocarbyl group of at least 5 carbon atoms form a predominate proportion of the block, and in the case of a B block, monomer(s) having a hydrocarbyl group of 1 to 4 carbon atoms form a predominant proportion of the block.

24. A polymer according to any one of the preceding claims wherein said polymer has been made using screened anionic polymerisation or group transfer polymerisation.

25. A coating composition suitable for application to a polypropylene-based substrate, which coating composition comprises at least one polypropylene-adherable polymer according to any one of claims 1 to 24.

26. A coating composition according to claim 25 which is a solvent-based composition comprising a solvent-based dispersion or solution of said polymer.

27. A coating composition according to claim 25 which is a water-based composition comprising a water-based dispersion or solution of said copolymer.

28. A coating which has been derived from a coating composition according to any one of claims 25 to 27.

29. A coated substrate comprising a substrate having a coating thereon derived from a coating composition according to any one of claims 25 to 27.

30. A coated substrate according to claim 29 wherein the substrate thereof is a polypropylene substrate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 298 667 (THE DOW CHEMICAL COMPANY)<br>* claims *<br>* examples 8-14 *<br>* table 1 *<br>* page 2, line 46 - page 3, line 6 * | 1,4-16 | C08F297/00<br>C08F293/00<br>C09D153/00 |
| A | WORLD PATENTS INDEX LATEST<br>Derwent Publications Ltd., London, GB;<br>AN 81-54036D<br>& JP-A-56 067 380 (SEKISUI CHEMI IND KK) 6 June 1981<br>* abstract * | 1 | |
| A | US-A-4 357 435 (LEWIS ET AL)<br>* claims *<br>* examples * | 1 | |

TECHNICAL FIELDS SEARCHED (Int. Cl.5 )

C08F
C09D

The present search report has been drawn up for all claims

| Place of search | Date of completion of the search | Examiner |
|---|---|---|
| THE HAGUE | 17 JULY 1992 | PERSSON E. K. |

EPO FORM 1503 03.82 (P0401)